# EUROPEAN PATENT APPLICATION

(11) **EP 2 420 946 A2**
(43) Date of publication of application: **22.02.2012**
(21) Application number: 11175365.3
(22) Date of filing: 26.07.2011
(51) Int. Cl.: G06F 17/30, G06K 9/22

(54) **User terminal, remote terminal, and method for sharing augmented reality service**

(30) Priority: 18.08.2010 KR 20100079906
(71) Applicant: Pantech Co., Ltd., Seoul 121-270 (KR)
(72) Inventor: Choi, Bong Weon, 121-270 Seoul (KR); Kang, Moon Key, 121-270 Seoul (KR); Eom, Tae Hun, 121-270 Seoul (KR); Lee, Sang Wook, 121-270 Seoul (KR); Lee, Young Youn, 121-270 Seoul (KR); Jeon, Hyoung Jun, 121-270 Seoul (KR); Choi, Jae Young, 121-270 Seoul (KR)
(74) Representative: Herzog, Markus

(57) **Abstract**

Provided are a user terminal, a remote terminal, and a method for sharing an augmented reality (AR) service. The method for sharing an AR service by a user terminal includes displaying an image received from a remote terminal; recognizing an object included in the displayed image; generating first AR result information using first AR data of the object stored in a first database; and displaying the generated first AR result information and the recognized object.

## Description

### CROSS-REFERENCE TO RELATED APPLICATION

This application claims priority from and the benefit of Korean Patent Application No. 10-2010-0079906, filed on August 18, 2010, which is hereby incorporated by reference for all purposes as if fully set forth herein.

### BACKGROUND OF THE INVENTION

FIELD

The following description relates to a user terminal, a remote terminal, and a method for sharing an augmented reality (AR) service, and more particularly, to a method for sharing an AR service, in which a user terminal may provide an AR service by receiving an image displayed on a remote terminal and displaying the image thereon, and a user terminal and a remote terminal to use the method.

DISCUSSION OF THE BACKGROUND

Augmented reality (AR) technology refers to a computer graphic technology for combining a real environment with an artificial object or information. Unlike general virtual reality technologies based on only virtual space and a virtual object, the AR technology combines a real environment with an artificial object or information, thereby adding supplementary information that may be difficult to obtain in the real environment. A user terminal to provide an AR service may analyze an object of an image taken by a camera provided on the user terminal, and provide AR data based on the analysis result.

### SUMMARY OF THE INVENTION

Exemplary embodiments of the present invention provide a user terminal, remote terminal, and method for sharing an augmented reality (AR) service to provide various AR data through data sharing with other terminals. Exemplary embodiments of the present invention also provide a user terminal to share an AR service using data shared with other terminals, and a remote terminal.

Additional features of the invention will be set forth in the description which follows, and in part will be apparent from the description, or may be learned by practice of the invention.

An exemplary embodiment of the present invention discloses a method for sharing an augmented reality (AR) service, including displaying an image received from a remote terminal; recognizing an object included in the image; generating first AR result information using first AR data stored in a first database, the first AR data corresponding to the object; and displaying the first AR result information and the object.

An exemplary embodiment of the present invention also discloses a user terminal to share an augmented reality (AR) service, including a display unit to display an image an object recognizing unit to recognize an object included in the image; and an AR data managing unit to generate a first AR result information using a first AR data stored in a first database, the first AR data corresponding to the object; wherein the first AR result information and the object are displayed on the display unit.

An exemplary embodiment of the present invention also discloses a method for sharing an augmented reality (AR) service between a remote terminal and a user terminal, including displaying in a remote terminal, an image and an AR result information of an object of the image; and transmitting the displayed image and object recognition information to the user terminal.

An exemplary embodiment of the present invention also discloses a remote terminal to share an augmented reality (AR) service with a user terminal, including a display unit to display an image and an AR result information of an object in the image; and a communication unit to transmit the displayed image and an object recognition information used to recognize the object, to the user terminal.

An exemplary embodiment of the present invention also discloses a system for sharing augmented reality services, including: a user terminal; and a remote terminal, wherein the remote terminal: obtains an image, and transmits the image to the user terminal; and wherein the user terminal: receives the image from the remote terminal, analyzes the image to determine an object, generates a first augment result information for the identified object, and displays the generated first augmented result information and the image on screen.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a view illustrating a system to share an AR service according to an exemplary embodiment.

FIG. 2 is a block diagram illustrating a user terminal of FIG. 1.

FIG. 3 is a block diagram illustrating a remote terminal of FIG. 1.

FIG. 4 is a flowchart illustrating a method for sharing an AR service according to an exemplary embodiment.

FIG. 5 is a flowchart illustrating a method for sharing an AR service according to an exemplary embodiment.

FIG. 6 is a flowchart illustrating a method for sharing an AR service according to an exemplary embodiment.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

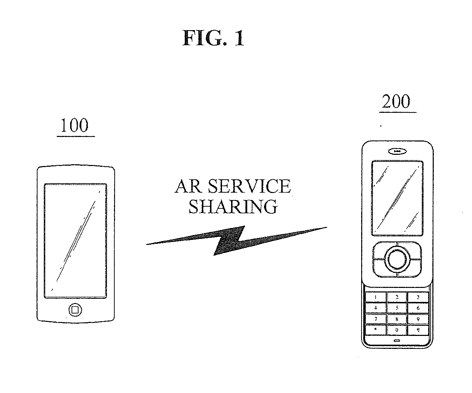

FIG. 1 is a view illustrating a system to share an AR service according to an exemplary embodiment.

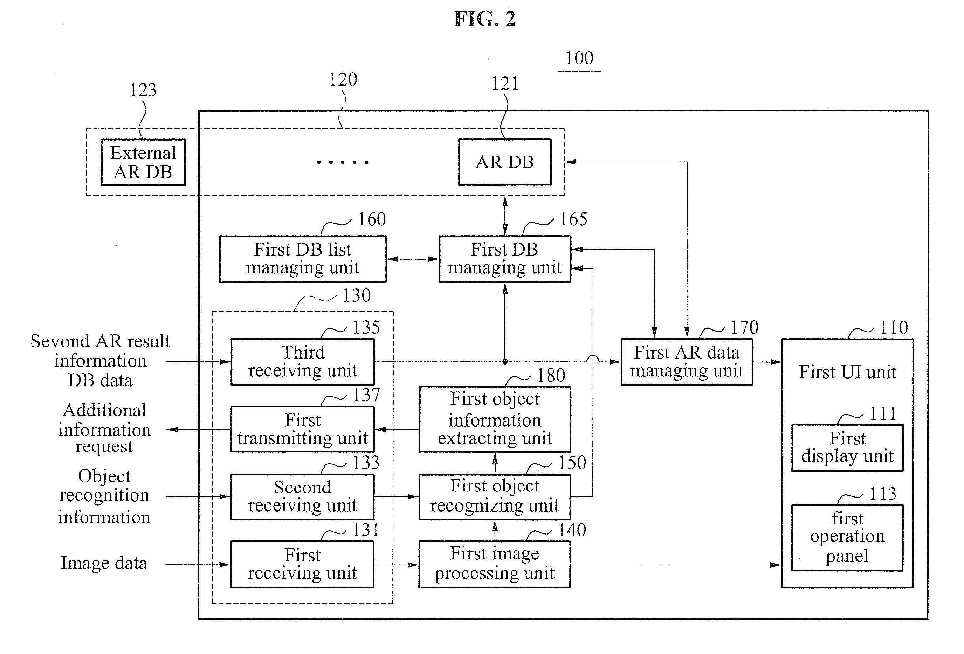

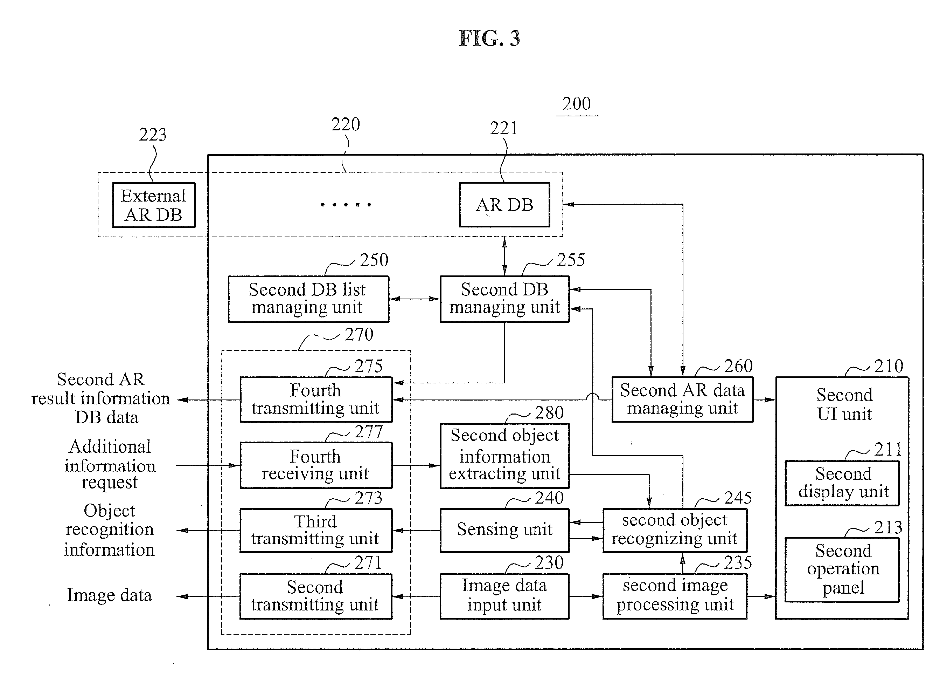

Referring to FIG. 1, the system includes a user terminal 100 and a remote terminal 200. The user terminal 100 and the remote terminal 200 may support an AR service, and wired or wirelessly communicate with each other via a communication network (not shown). The user terminal 100 and the remote terminal 200 may transmit and receive data used to share an AR service. The user terminal 100 and the remote terminal 200 may be electronic appliances, for example, smart phones, laptop computers, desktop computers, audio/visual communication terminals, etc. Each element of the user terminal 100 and the remote terminal 200 described below with reference to FIG. 2 and FIG. 3 may be implemented by a processor (not shown). a control unit (not shown), or software depending on programs stored in a memory, or a combination thereof.

The user terminal 100 may receive image data from the remote terminal 200 and display an image using the image data, and may be the terminal of a user receiving an AR service. If the user terminal 100 shares an AR service with an external terminal, the user terminal 100 may provide a function of the remote terminal 200.

The remote terminal 200 may transmit an image obtained by the remote terminal 200 to the user terminal 100 and provide the user terminal 100 with AR result information or AR data of an object existing on the image. The remote terminal 200 may provide a function to the user terminal 100.

Hereinafter, an exemplary embodiment for sharing an AR service is described, and the terms used in the specification are defmed in Table 1 for convenience of description.

Table 1

| **Terms** | **Meaning used in the embodiment of the present invention** |
|---|---|
| AR data | Data used to determine AR result information. |
| | For example, but without limitation, AR data may include price information of products, shelf life of products, navigation information, etc. |
| AR result information | Information regarding images that is finally displayed to a user. |
| | For example, but without limitation, AR result information may include color applied to a font indicating the price of products, fonts, etc. |
| Object recognition information (raw) | Information used to generate AR result information, except AR data, i.e. information used to recognize an object in an image. |
| | For example, but without limitation, Object recognition information (raw) may include GPS information, compass information, gyroscope information, etc. |
| Database (DB) data | Address information indicating a location of a DB where AR data or AR result information is substantially stored. |
| | For example, but without limitation, Database (DB) data may include user resource locator (URL) of a server to manage price information of products. |

FIG. 2 is a block diagram illustrating the user terminal 100 of FIG. 1.

Referring to FIG. 2, the user terminal 100 includes a first user interface (UI) unit 110, a first database (DB) unit 120, a first communication unit 130, a first image processing unit 140, a first object recognizing unit 150, a first DB list managing unit 160, a first DB managing unit 165, a first AR data managing unit 170, and a first object information extracting unit 180.

The first UI unit 110 may provide interfacing between a user and the user terminal 100 and include a first display unit 111 and a first operation panel 113.

When image data received from the remote terminal 200 is processed into a signal, the first display unit 111 may display an image using the processed image data. If the user terminal 100 provides a touch-type UI the first display unit 111 may display a UI of a touch panel. If the user terminal 100 has a camera, the first display unit 111 may display an image taken by the camera.

The first operation panel 113 may receive an input from a user command, and include various interfaces, for example, a button, a directional key, a touch panel, etc.

The first DB unit 120 may be managed by the first DB managing unit 165 and store AR data for providing an AR service for each object. The first DB unit 120 may include a multiple of physical AR DBs 121 and 123. Each of the DBs 121 and 123 may be in the user terminal 100 or in an external server (not shown) used by the user terminal 100.

The first DB unit 120 may also store first AR result information that is substantially displayed to a user using the first AR data. The first AR result information may include information displayed to a user, for example, font, letter size, color information, etc., which is used to indicate the first AR data.

The first communication unit 130 may wired or wirelessly communicate with the remote terminal 200. The first communication unit 130 includes a first receiving unit 131, a second receiving unit 133, a third receiving unit 135 and a first transmitting unit 137. The first receiving unit 131, the second receiving unit 133, the third receiving unit 135, and the first transmitting unit 137 may be physically included in one communication module, or may be included in different communication modules.

The first receiving unit 131 may receive image data from the remote terminal 200. The first receiving unit 131 transmits the image data to the first image processing unit 140. The image data may be moving image data or still image data. The image data may be data from an image taken by the remote terminal 200.

The second receiving unit 133 may receive object recognition information from the remote terminal 200. The second receiving unit 133 may analyze the object recognition information and transmit the analyzed result to the first object recognizing unit 150. The analyzed result of object recognition information may include coordinate information of the remote terminal 200, view information of a camera of the remote terminal 200, etc.

The third receiving unit 135 may receive second AR result information and DB data from the remote terminal 200. The third receiving unit 135 transmits the received second AR result information to the first AR data managing unit 170. The third receiving unit 135 transmits the received DB data to the first DB managing unit 165. The second AR result information may be provided to a user along with the first AR result information stored in the first DB unit 120 of the user terminal 100, and/or used to supplement the first AR result information. The DB data may be used to supplement a DB list recorded in the first DB list managing unit 160.

The first transmitting unit 137 may transmit a message requesting additional information about a specific object to the remote terminal 200. The specific object may be included in the displayed image. The displayed image may be an image received via the first receiving unit 131. The transmitted message may include information used to recognize a specific object and/or intent information about a reason the specific object was selected.

The first, second, and third receiving units 131, 133, and 135 may receive additional information from the remote terminal 200 in response to the transmitted message. The remote terminal 200 may select additional information to transmit based on the intent information.

The first image processing unit 140 may process image data received from the first receiving unit 131 into a displayable signal. The first image processing unit 140 transmits the processed image data to the first object recognizing unit 150 and the first display unit 111. The first display unit 111 may display an image using the processed image data. Accordingly, the first display unit 111 may display an image provided by the remote terminal 200, and as a result, the user terminal 100 may share the image with the remote terminal 200.

The first object recognizing unit 150 may determine an object included in the image data received from the first image processing unit 140. The first object recognizing unit 150 may determine an object by applying a contour detection algorithm to the image data. Alternatively, the first object recognizing unit 150 may recognize an object using object recognition information analyzed by the second receiving unit 133. There may be more than one recognized object. The first object recognizing unit 150 may transmit the recognized objects to the first object information extracting unit 180 and the first DB managing unit 165.

The first DB list managing unit 160 may manage source information of the AR data and AR result information stored in the first DB unit 120. Thus, the first DB list managing unit 160 manages a DB list which includes location information for a DB of the first DB unit 120, where the AR data and AR result information is stored.

The first DB managing unit 165 may retrieve a DB that stores information about the determined object received from the first object recognizing unit 150. The information may be AR data or AR result information. The first DB managing unit 165 may further identify, for each determined object, location information of a DB where the information about the objects is stored, using a DB list. The first DB managing unit 165 may control a DB corresponding to the identified location information. Finally, the first DB managing unit 165 may transmit AR data about the determined object to the first AR data managing unit 170.

The first AR data managing unit 170 may request first AR data from a DB in first DB unit 120 or from the first DB managing unit 165. The first AR data managing unit 170 may receive first AR data from the first DB unit 120 and generate first AR result information using the received first AR data. By way of example, when the first AR data includes information that the price of an 'A' product is $1, the first AR data managing unit 170 may adjust font, letter size and letter color of '$1,' and generate first AR result information.

The first AR data managing unit 170 may transmit the generated AR result information to the first display unit 111. Accordingly, the first display unit 111 may display the image received from the first image processing unit 140 and the first AR result information received from the first AR data managing unit 170 together.

A specific object may be selected from among objects transmitted from the first object recognizing unit 150 by a user. When an object is specified, the first object information extracting unit 180 may transmit information about the selected specific object and intent information with a reason why the specific object was selected to the first transmitting unit 137.

Hereinafter, a process for implementing an AR service is described in more detail. The process for implementing the AR service uses a first AR result information stored in the user terminal 100, an image, and a second AR result information provided from the remote terminal 200.

The first AR data managing unit 170 may compare second AR result information received from the third receiving unit 135 with first AR result information stored in the first DB unit 120, and determine whether the first AR result information is identical to the second AR result information. By way of example, if the first AR result information and the second AR result information belong to different AR service categories currently applied in the user terminal 100 and the remote terminal 200, the first AR result information is different from the second AR result information. By way of further illustration, if the first AR result information belongs to an architecture history category applied in the user terminal 100 and the second AR result information belongs to an architectural fine art category applied in the remote terminal 200, the first AR result information may be determined to be different from the second AR result information.

The first and second AR result information may differ even if in the same category. By way of example, the first AR result information and the second AR result information belonging to the same category may differ if: AR data stored in the user terminal 100 is different from AR data stored in the remote terminal 200, an AR data update time of the user terminal 100 is different from an AR data update time of the remote terminal 200, or a DB management company of the user terminal 100 is different from a DB management company of the remote terminal 200.

If the first AR result information is different from the second AR result information, the first AR data managing unit 170 may supplement the first AR result information with the second AR result information. The first AR data managing unit 170 transmits the supplemented first AR result information to the first display unit 111. If the first AR result information is different from the second AR result information, the first AR data managing unit 170 may transmit the second AR result information to the first DB managing unit 165.

The first DB managing unit 165 may enable retrieval of the first AR data after storing the second AR result information received from the first AR data managing unit 170 in the first DB unit 120. The first DB managing unit 165 may store the second AR result information in a DB where the first AR result information of the object is stored. The first DB managing unit 165 may retrieve first AR data from DB in first DB unit 120 that stores the object information used to recognize the object and transmit the first AR data to the first AR data managing unit 170. The first DB managing unit 165 may receive the supplemented first AR result information from the first AR data managing unit 170, and store the information in the first DB unit 120.

Also, the first DB managing unit 165 may add DB data received from the third receiving unit 135 to a DB list stored in the first DB list managing unit 160, thereby supplementing the DB list.

Hereinafter, an exemplary process is described for requesting feedback of additional information about a specific object from the remote terminal 200. The process may be performed by the user terminal 100.

As described above, objects recognized by the first object recognizing unit 150 may be transmitted to the first object information extracting unit 180. A specific object may be selected from among the objects transmitted by the first object recognizing unit 150. The first object information extracting unit 180 may transmit information about the selected specific object and intent information to the first transmitting unit 137. The information about the specific object may include: coordinate information of the specific object on a displayed image and time information about when the image was obtained by the remote terminal 200. The specific object may be an object selected by the user to obtain additional information about from among objects displayed on the first display unit 111 or an object automatically selected by an application in use. Intent information includes a reason why the specific object was selected. The intent information about the reason the specific object was selected may include a request for second AR result information, a request for object recognition information, and a request for AR data.

The first transmitting unit 137 may transmit a message requesting additional information about a specific object to the remote terminal 200. The message may include information for identifying the specific object, requested additional information, and intent information with a reason the specific object was selected.

At least one of the second receiving unit 133 and the third receiving unit 135 may receive additional information from the remote terminal 200 in response to the message transmitted by the first transmitting unit 137. The remote terminal 200 may select additional information using the intent information and transmit the selected additional information to the user terminal 100.

At least one of the first object recognizing unit 150 and the first AR data managing unit 170 may receive additional information from at least one of the second receiving unit 133 and the third receiving unit 135, and may provide the additional information to a user or update data of the first DB unit 120 by storing the additional information in the first DB unit 120.

FIG. 3 is a block diagram illustrating the remote terminal 200 of FIG. 1.

The remote terminal 200 may include a second UI unit 210, a second DB unit 220, an image data input unit 230, a second image processing unit 235, a sensing unit 240, a second object recognizing unit 245, a second DB list managing unit 250, a second DB managing unit 255, a second AR data managing unit 260, a second communication unit 270 and a second object information extracting unit 280.

The second UI unit 210 may provide interfacing between a user and the remote terminal 200. The second UI unit may further include a second display unit 211 and a second operation panel 213. The second UI unit 210 is similar to the first UI unit 110 of FIG. 2, and its detailed description is thus omitted herein.

The second DB unit 220 may be managed by the second DB managing unit 255, and store second AR data for providing an AR service for each object. The second DB unit 220 may include multiple physical AR DBs 221 and 223. Each of the DBs 221 and 223 may be in the remote terminal 200 or in an external server (not shown) used by the remote terminal 200.

The second DB unit 220 may store second AR result information that is substantially displayed on the user terminal 100. The second DB unit 220 may further store first AR data, i.e. AR data of an object received from the user terminal 100.

The image data input unit 230 may receive image data obtained by an external camera (not shown) and transmit the image data to the second image processing unit 235. The image data input unit 230 may include a camera.

The second image processing unit 235 may process the image data into a displayable signal, and transmit the processed image data to the second display unit 211 and the second object recognizing unit 245. The second display unit 211 may display an image using the image data.

The sensing unit 240 may analyze sensing data sensed by a sensor (not shown) and obtain object recognition information. The sensing unit 240 may transmit the object recognition information to the second object recognizing unit 245.

The second object recognizing unit 245 may recognize an object included in the image data using the object recognition information received from the sensing unit 240. The second object recognizing unit 245 may recognize an object by applying a contour detection algorithm to the image data. There may be more than one recognized object. The second object recognizing unit 245 may transmit the recognized objects to the sensing unit 240 and the second DB managing unit 255.

When the second object recognizing unit 245 receives a message requesting additional information about a specific object, the second object recognizing unit 245 may analyze the message and recognize the requested additional information.

The second DB list managing unit 250 may manage a DB list including location information of a DB of the second DB unit 220 where second AR data is stored.

The second DB managing unit 255 may retrieve a DB that stores information related to an object received from the second object recognizing unit 245. The related information may be second AR data or second AR result information that is substantially displayed using the second AR data. The second DB managing unit 255 may identify the location information of the DB using a DB list. The second DB managing unit 255 may control a DB corresponding to the identified location information and provide second AR data about the object to the second AR data managing unit 260. The second DB managing unit 255 may also transmit address information for the DB to the second communication unit 270. The second communication unit 270 may transmit the address information of the DB, where the related information is stored, to the user terminal 100.

The second AR data managing unit 260 may request second AR data from the second DB managing unit 255 or directly from the corresponding DB in the second DB unit 220.The second AR data managing unit 260 may receive the second AR data from the second DB unit 220 and generate second AR result information using the second AR data. The second AR data managing unit 260 may transmit the generated second AR result information to the second display unit 211 and the second communication unit 270. The second AR result information may be transmitted to the user terminal 100 via the second communication unit 270 and displayed on the user terminal 100. The second display unit 211 may display an image received from the second image processing unit 235 and the second AR result information transmitted from the second AR data managing unit 260 together.

The second communication unit 270 may wired or wirelessly communicate with the user terminal 100, and may include a second transmitting unit 271, a third transmitting unit 273, a fourth transmitting unit 275, and a fourth receiving unit 277.

The second transmitting unit 271 may transmit image data received from the image data input unit 230 to the user terminal 100.

The third transmitting unit 273 may transmit object recognition information received from the sensing unit 240 to the user terminal 100.

The fourth transmitting unit 275 may transmit, to the user terminal 100, DB data received from the second DB managing unit 255 and second AR result information received from the second AR data managing unit 260.

The fourth receiving unit 277 may receive a message requesting additional information about a specific object from the user terminal 100 and transmit the message to the second object information extracting unit 280. At least one of the second transmitting unit 271, the third transmitting unit 273 and the fourth transmitting unit 275 may transmit additional information to the user terminal 100 in response to the received message.

The second object information extracting unit 280 may analyze the message received by the fourth receiving unit 277 and determine identity information of a specific object. The specific object may be an object existing on the image that was transmitted to the user terminal 100 by the second transmitting unit 271. The identity information of the specific obj ect may include an identification of the specific object and/or location information of the specific object. The location information of the specific object may be computed relative to the image. The second object information extracting unit 280 may transmit the determined identity information of the specific object and the message to the second object recognizing unit 245.

When the requested additional information is object recognition information, the second object recognizing unit 245 may forward the request for additional information to the sensing unit 240. In response, the sensing unit 240 may obtain new object recognition information or the finally obtained object recognition information as additional information. The sensing unit transmits the additional information to the second communication unit 270.

When the requested additional information is at least one of second AR data or DB data, the second object recognizing unit 245 may transmit the identity information of the recognized specific object to the second DB managing unit 255. The second DB managing unit 255 may identify a DB corresponding to the identity information of the specific object from the second DB list managing unit 250, and read data corresponding to the additional information from a DB of the second DB unit 220. At least one of object recognition information corresponding to the read additional information, second AR data and DB data may be fed back to the user terminal 100 via the second communication unit 270.

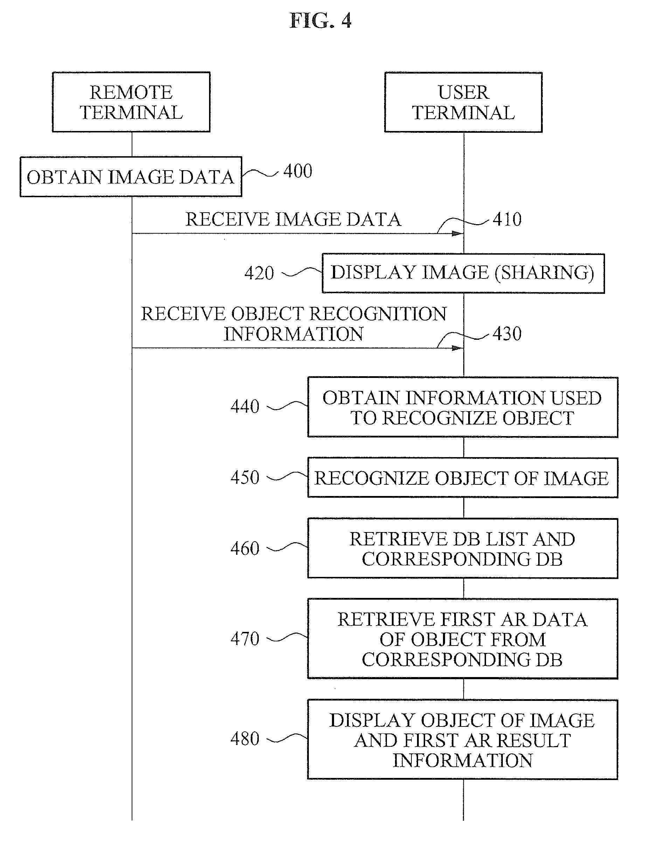

FIG. 4 is a flowchart illustrating a method for sharing an AR service according to an exemplary embodiment.

In exemplary embodiments, the method for sharing an AR service of FIG. 4 may be performed by the user terminal 100 the remote terminal 200 of FIG. 2 and FIG. 3, respectively, or a processor (not shown), but is not limited thereto. Although depicted as being performed serially, those skilled in the art will appreciate that at least a portion of the operations of the method of FIG. 4 may be performed contemporaneously, or in a different order than presented in FIG. 4.

In operation 400, the remote terminal may obtain image data and display an image using the image data. The image data may be data of an image taken by a camera of the remote terminal or data stored in the remote terminal.

In operation 410, the user terminal may receive the image data from the remote terminal.

In operation 420, the user terminal may display an image using the received image data. Accordingly, the user terminal may share the same image with the remote terminal.

In operation 430, the user terminal may receive object recognition information from the remote terminal. The object recognition information may be used to recognize an object existing on the displayed image.

In operation 440, the user terminal may analyze the object recognition information and obtain information used to recognize an object. The obtained information may include GPS information about the remote terminal, view information of a camera of the remote terminal, sensing information about a gyroscope, etc.

In operation 450, the user terminal may recognize an object of the image data received in operation 410. The user terminal may recognize an object by applying a contour detection algorithm to the image data.

In operation 460, the user terminal may retrieve a DB list and a corresponding DB that stores first AR data, i.e. AR data about the recognized object.

In operation 470, the user terminal may retrieve first AR data of the object from the corresponding DB.

In operation 480, the user terminal may generate first AR result information in a displayable form using the retrieved first AR data and display the object of the image and the first AR result information together.

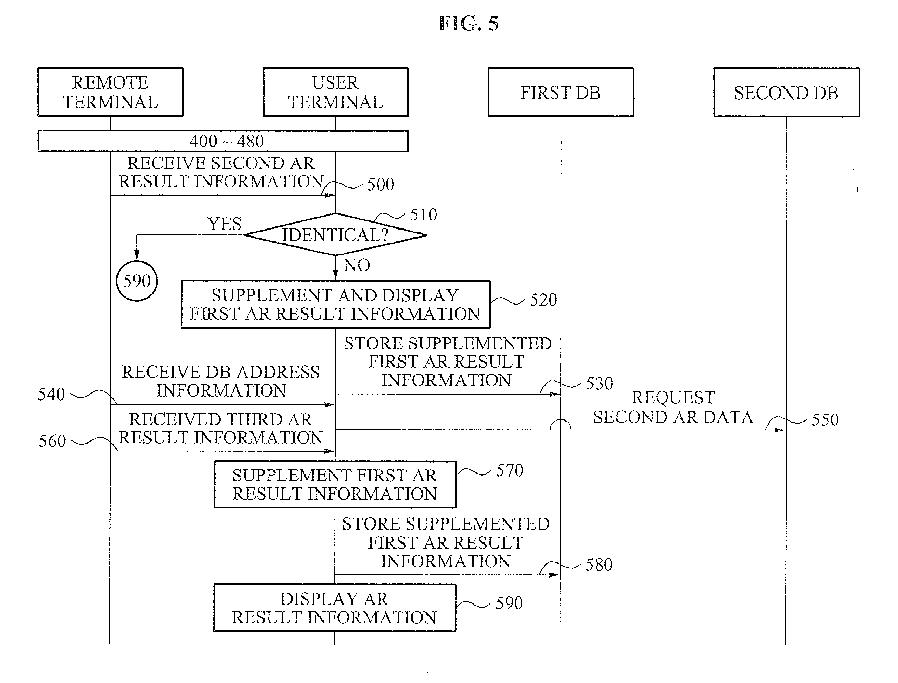

FIG. 5 is a flowchart illustrating a method for sharing an AR service according to another exemplary embodiment.

The sharing method of FIG. 5 may be a process for implementing an AR service using AR result information stored in a user terminal and AR result information stored in a remote terminal. The method may be performed by the user terminal 100 and the remote terminal 200 of FIG. 2 and FIG. 3, respectively, but is not limited thereto. A first DB may be the first DB unit 120 of the user terminal 100 and a second DB may be the second DB unit 220 of the remote terminal 200. Although depicted as being performed serially, at least a portion of the operations of the method of FIG. 5 may be performed contemporaneously, or in a different order than presented in FIG. 5.

The remote terminal and the user terminal may perform operations 400 to 480 described with reference to FIG. 4.

In operation 500, the user terminal may receive second AR result information of an object existing on an image, from the remote terminal.

In operation 510, the user terminal may compare the second AR result information received in operation 500 with first AR result information stored in the user terminal, and determine whether the first AR result information is identical to the second AR result information.

In operation 520, when the first AR result information is not identical to the second AR result information, the user terminal may supplement and display first AR result information using the second AR result information and display the supplemented first AR result information.

In operation 530, the user terminal may store the supplemented first AR result information in the first DB unit.

In operation 540, the user terminal may receive DB address information and DB data including a DB address related to the object from the remote terminal. The received DB data or DB address may be added to a DB list of the DB list managing unit of the user terminal.

In operation 550, the user terminal may request second AR data from the second DB unit. The request is sent to the DB corresponding to the DB address received in operation 540. The user terminal may make a request, to the remote terminal, for second AR data, i.e., AR data of the recognized object.

In operation 560, the user terminal may receive a third AR result information from the remote terminal. The third AR result information received in operation 560 and the second AR result information received in operation 500 may be determined from different AR data.

In operation 570, the user terminal may supplement the first AR result information using the third AR result information received in operation 560.

In operation 580, the user terminal may store the supplemented first AR result information in the first DB unit.

In operation 590, the user terminal may display AR result information. In exemplary embodiments, the AR result information may be the supplemented first AR result information. In another exemplary embodiment, in operation 590, the user terminal may display the first AR result information if the second AR result information, received in operation 500, was identical to the first AR result information.

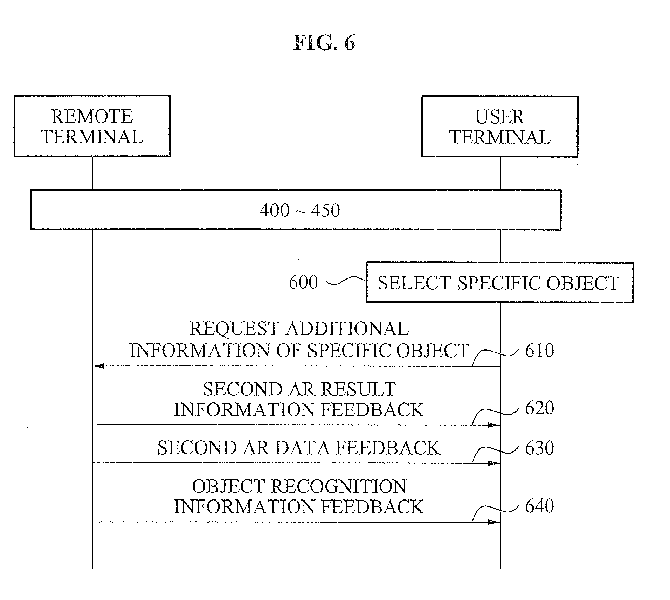

FIG. 6 is a flowchart illustrating a method for sharing an AR service according to an exemplary embodiment.

The sharing method of FIG. 6 may be a process of a user terminal requesting feedback of additional information for an AR service from a remote terminal, and may be performed by the user terminal 100 and the remote terminal 200 of FIG. 2 and FIG. 3, respectively, but is not limited thereto. Although depicted as being performed serially, at least a portion of the operations of the method of FIG. 6 may be performed contemporaneously, or in a different order than presented in FIG. 6.

The remote terminal and the user terminal may perform the operations 400 to 450 described with reference to FIG. 4, before operation 600.

In operation 600, the user terminal 100 may select a specific object among objects existing on a displayed image. The specific object may be selected by a user or may be automatically selected by an application in use.

In operation 610, the remote terminal may transmit a message with a request for additional information about the specific object to the remote terminal. The message may include information for identifying the specific object and intent information with a reason for why the specific object was selected. The intent information may include a request for second AR result information, a request for AR data, and a request for object recognition information.

In operation 620, when the intent information includes a request for second AR result information, the user terminal may receive second AR result information feedback from the remote terminal.

In operation 630, when the intent information includes a request for AR data, the user terminal may receive second AR data feedback from the remote terminal.

In operation 640, when the intent information includes a request for object recognition information, the user terminal may receive, from the remote terminal, object recognition information feedback used to recognize an object.

Exemplary examples of the present invention in use are described below. The following examples are for illustrative purposes only and are not intended to limit the scope of the present disclosure.

A user communicating with a second user using an audio-video communication terminal may provide air tagging to a distant space where the second user is located, and not a space where the user is located.

A user may perform an audio-video communication with a second user using an audio-video communication terminal. The user may transmit an image of space where the user is currently located, and receive information about the location and direction of the space where the user is currently located from the second user. For example, the user and the second user may share an image of a park where the user is located, and the second user may provide the user with a navigation service related to the park.

When a user is taking an image and a second user sees the image in real time using an audio-video communication terminal, the user may perform a navigation AR service and the second user may perform a restaurant guide AR service. In this instance, the second user may receive a navigation AR service from the user and supplement the restaurant guide AR service of the second user with navigation information.

When a user is taking an image and a second user sees the image in real time using an audio-video communication terminal, the user may perform a navigation AR service and the second user may perform a restaurant guide AR service. In this instance, the user may not recognize a restaurant on the image as an object. The second user may provide a restaurant object recognized by the second user to a terminal of the user.

When a user is taking an image and another user sees the image in real time using an audio-video communication terminal, and the user and the second user perform the same AR service, an AR server or a database used by the user may be different from that of the second user. Accordingly, the user and the second user may be provided with different AR services. In this instance, the user and the second user may share AR result information through communication with each other and supplement each AR service of the user and the second user.

The embodiments of the present invention provide a user terminal, a remote terminal, and a method for sharing an AR service, in which a bi-directional AR service may be provided between a user terminal and a remote terminal such that the user terminal shares an AR service with the remote terminal through communication with the remote terminal.

The embodiments of the present invention further provide a user terminal, a remote terminal, and a method for sharing an AR service, in which a database of a user terminal may be updated such that the user terminal shares an image taken by a remote terminal with the remote terminal, receives information for an AR service from the remote terminal, and supplements the contents of the AR service with the received information.

The embodiments of the present invention further also provide a user terminal, a remote terminal, and a method for sharing an AR service, in which a bi-directional AR service may be provided such that a user terminal selects a desired object on a displayed image, requests a remote terminal provide information about the selected object, and receives the information from the remote terminal.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of practicing the present invention, or they may be of the kind well-known and available to those having skill in the computer software arts.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents
Provided are a user terminal, a remote terminal, and a method for sharing an augmented reality (AR) service. The method for sharing an AR service by a user terminal includes displaying an image received from a remote terminal; recognizing an object included in the displayed image; generating first AR result information using first AR data of the object stored in a first database; and displaying the generated first AR result information and the recognized object.

## Claims

1. A method for sharing an augmented reality (AR) service, comprising:
displaying an image received from a remote terminal;
recognizing an object included in the image;
generating first AR result information using first AR data stored in a first database, the first AR data corresponding to the object; and
displaying the first AR result information and the recognized object.

2. The method of claim 1, wherein recognizing the object further comprises analyzing image data and identifying the object according to the image data.

3. The method of claim 1 or 2, further comprising:
receiving object recognition information,
wherein recognizing of the object further comprises analyzing the received object recognition information and identifying the object according to the object recognition information.

4. The method of any of claims 1 to 3, further comprising:
receiving a second AR result information;
adding the received second AR result information to the first AR result information to generate supplemented first AR result information if the second AR result information is different from the first AR result information; and
displaying the supplemented first AR result information.

5. The method of claim 4, further comprising:
storing at least one of the supplemented first AR result information or an AR data of the supplemented first AR result information in the first database.

6. The method of claim 4 or 5, further comprising:
receiving address information of a second database storing a second AR data;
accessing the second database using the received address information;
receiving a third AR result information generated using the second AR data stored in the second database;
and, optionally, further comprising:
storing at least one of the third AR result information or the second AR data of the third AR result information in the first database; and
adding the received address information of the second database to a database list.

7. The method of any of claims 1 to 6, further comprising:
requesting additional information about the recognized object;
receiving the additional information of the recognized object; and
supplementing the first AR result information of the recognized object using the received additional information;
the additional information preferably comprising at least one of AR data of the recognized object, object recognition information, and address information of a database storing the AR data of the recognized object.

8. A user terminal adapted to share an augment reality (AR) service, comprising:
a display unit adapted to display an image;
an object recognizing unit adapted to recognize an object included in the image; and
an AR data managing unit adapted to generate a first AR result information using a first AR data stored in a first database, the first AR data corresponding to the object;
wherein the generated first AR result information and the recognized object are displayed on the display unit.

9. The user terminal of claim 8, wherein the object recognizing unit is adapted to analyze image data from the image and to identify the object according to the image data.

10. The user terminal of claim 8 or 9, further comprising:
a communication unit adapted to receive object recognition information,
wherein the object recognizing unit is adapted to analyze the object recognition information and to identify the object.

11. The user terminal of claim 9 or 10, further comprising:
a communication unit adapted to receive a second AR result information,
wherein the AR data managing unit is adapted to add the second AR result information to the first AR result information to generate supplement first AR result information if the second AR result information is different from the first AR result information and the display unit is adapted to display the supplemented first AR result information;
and, optionally, further comprising:
a database managing unit adapted to store at least one of the supplemented first AR result information or a first AR data of the supplemented first AR result information in a first database.

12. The user terminal of claim 11, wherein the database managing unit is further adapted to store the third AR result information in the first database,
wherein the communication unit is adapted to receive address information of a second database storing a second AR data, to access the second database using the address information, and to receive a third AR result information,
and wherein, optionally, the database managing unit is adapted to add the received address information of the second database to a database list.

13. The user terminal of claim 9 to 12, further comprising:
a communication unit adapted to transmit a message requesting additional information about the recognized object, and adapted to receive the additional information about the recognized object wherein the AR data managing unit supplements the first AR result information using the additional information;
and wherein, optionally, the additional information includes at least one of anAR data of the recognized object, object recognition information, and address information of a database storing the AR data of the recognized object.

14. A system for sharing augmented reality services, comprising:
a user terminal; and
a remote terminal,
wherein the remote terminal is adapted to obtain an image, and to transmit the image to the user terminal; and
wherein the user terminal is adapted to receive the image from the remote terminal, to analyze the image to determine an obj ect, to generate a first augment result information for the object, and to display the first augmented result information and the image on a display unit.

15. The system of claim 14, wherein the remote terminal is further adapted to generate a second augmented reality result information; and wherein the user terminal is further adapted to receive the second augmented reality result information, to determine if the first and second augmented reality result information are identical, if the first and second augmented reality result information are not identical, to supplement the first augmented reality result information with the second augmented reality result information to generate supplemented first augmented reality result information, and to display the supplemented first augmented reality result information.

16. A method for sharing an augmented reality (AR) service between a remote terminal and a user terminal, the method comprising:
displaying, in a remote terminal, an image and an AR result information of an object of an image; and
transmitting the displayed image and an object recognition information to the user terminal.

17. The method of claim 16, further comprising:
generating AR result information using an AR data of the object;
transmitting the generated AR result information; and
transmitting address information of a database storing the AR data.

18. A remote terminal to share an augmented reality (AR) service with a user terminal, comprising:
a display unit adapted to display an image and an AR result information of an object in the image; and
a communication unit adapted to transmit the displayed image and an object recognition information.

19. The remote terminal of claim 18, further comprising:
an AR data managing unit adapted to generate AR result information using an AR data of the object, wherein the communication unit transmits the generated AR result information and an address information of a database storing the AR data.
